Europäisches Patentamt

European Patent Office

Office européen des brevets

(19)

(11) Numéro de publication: **0 279 728 B1**

(12) **FASCICULE DE BREVET EUROPEEN**

(45) Date de publication du fascicule du brevet:
11.04.90

(51) Int. Cl.⁴: **F16D 3/84**

(21) Numéro de dépôt: **88400233.8**

(22) Date de dépôt: **02.02.88**

(54) **Soufflet d'étanchéité pour joints de transmission de véhicules automobiles.**

(30) Priorité: **10.02.87 FR 8701595**

(43) Date de publication de la demande:
**24.08.88 Bulletin 88/34**

(45) Mention de la délivrance du brevet:
**11.04.90 Bulletin 90/15**

(84) Etats contractants désignés:
**BE DE ES IT SE**

(56) Documents cités:
**EP-A- 0 093 937**
**FR-A- 1 392 289**
**FR-A- 2 414 144**
**GB-A- 2 012 022**
**GB-A- 2 071 790**

(73) Titulaire: **REGIE NATIONALE DES USINES RENAULT,
Boîte postale 103 8-10 avenue Emile Zola,
F-92109 Boulogne-Billancourt(FR)**
Titulaire: **COMPAGNIE DES PRODUITS INDUSTRIELS
DE L'OUEST (C.P.I.O.), Boîte Postale 1226 Zone
Industrielle de Nantes Carquefou, F-44023 Nantes
Cédex(FR)**

(72) Inventeur: **Botti, Jean, 1, Allée des Acacias,
F-92190 Meudon La Foret(FR)**
Inventeur: **Haran, Michel, 3, rue Jean Lurçat,
F-72700 Allones(FR)**
Inventeur: **Lallement, Serge, 2, Les Hauts de l'Erdre,
F-44240 La Chapelle S/Erdre(FR)**

(74) Mandataire: **Ernst-Schonberg, Michel et al, REGIE
NATIONALE DES USINES RENAULT
(S. 0267) 8 & 10, avenue Emile Zola, F-92109 Boulogne
Billancourt Cédex(FR)**

## Description

L'invention concerne un soufflet d'étanchéité pour joints de transmission de véhicules du type comportant un corps à paroi ondulée d'épaisseur déterminée et deux collerettes d'extrémité destinées à être emmanchées respectivement sur les parties menante et menée du joint, dont l'une est constituée par un arbre portant une gorge de réception d'une nervure annulaire portée par la surface intérieure de la collerette (voir par exemple EP-A 93 937).

Lors du montage du soufflet, il est connu de déformer radialement la collerette dans le but de favoriser l'introduction dans le soufflet d'une canule de remplissage de graisse qui permet également une mise à l'atmosphère de l'espace interne du soufflet au cours du processus de remplissage.

Lorsque le soufflet d'étanchéité utilise un matériau thermoplastique, les contraintes de montage et de remplissage sont inadaptées aux caractéristiques intrinsèques du matériau si bien que le processus de remplissage de graisse précédemment utilisé ne peut plus être mis en oeuvre.

L'invention a pour objet une réalisation particulièrement simple de mise à l'atmosphère et de remplissage d'un tel soufflet et qui, le cas échéant, est aisément adaptable sur tout soufflet existant non pourvu de dispositions constructives de mise à l'atmosphère.

Essentiellement à cet effet, le soufflet est caractérisé par le fait que la surface intérieure de la collerette d'extémité tournée vers la surface extérieure de l'arbre présente au moins une rainure de remplissage de graisse et d'évacuation d'air du soufflet et que ladite rainure débouche de part et d'autre d'une nervure annulaire portée par la surface intérieure de la collerette, susceptible de venir en contact axial de retenue avec les flancs d'une gorge située à la périphérie de l'arbre.

Le soufflet ainsi réalisé peut être rempli de graisse sans nécessiter de déformation préalable de celui-ci, autre que celle liée à la flexibilité du matériau au niveau des ondulations de sa paroi. Il apparaît en effet que le remplissage du soufflet s'effectue par l'introduction d'une dose de graisse suffisante au moyen d'une canule placée dans la rainure, entre l'arbre et la surface intérieure de la collerette.

Une autre rainure assure au besoin l'évacuation de l'air contenu dans le soufflet pendant la durée du remplissage.

Lorsque le remplissage est terminé, il suffit de déplacer axialement la collerette en direction de la gorge portée par l'arbre jusqu'à l'introduction de la nervure annulaire portée par la collerette dans ladite gorge dont les flancs assurent simultanément le contact axial de retenue et l'obturation de l'ensemble des rainures.

D'autres caractéristiques et avantages de l'invention apparaîtront à la lecture de la description qui suit, faite en référence au dessin annexé sur lequel :

- la figure 1 est une vue en coupe axiale d'un joint de transmission équipé du soufflet d'étanchéité conforme à l'invention montrant la position du soufflet au cours du processus de remplissage,
- la figure 2 est une coupe à une plus grande échelle de la collerette d'extrémité du soufflet suivant la ligne 2-2 de la figure 4, au cours du processus de remplissage,

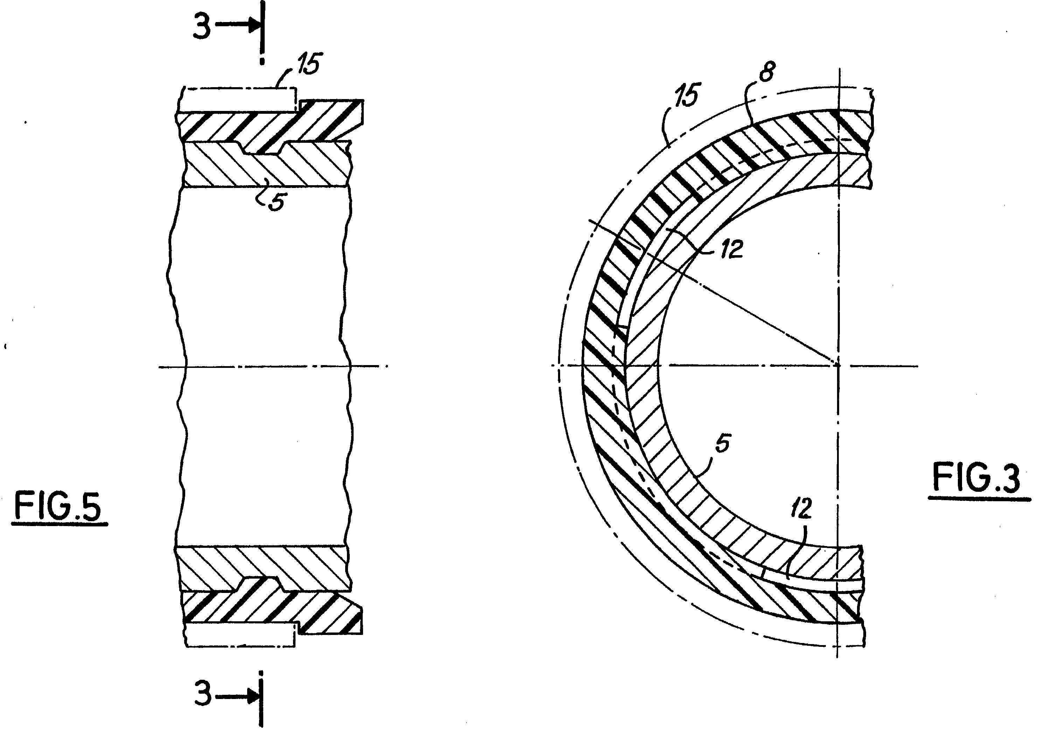

- la figure 3 est une coupe à une plus grande échelle de la collerette d'extrémité du soufflet suivant la ligne 3-3 de la figure 5, après la mise en place définitive du soufflet,
- les figures 4 et 5 sont des vues en coupe axiale à une plus grande échelle de la collerette d'extrémité du soufflet représentée aux figures 2 et 3.

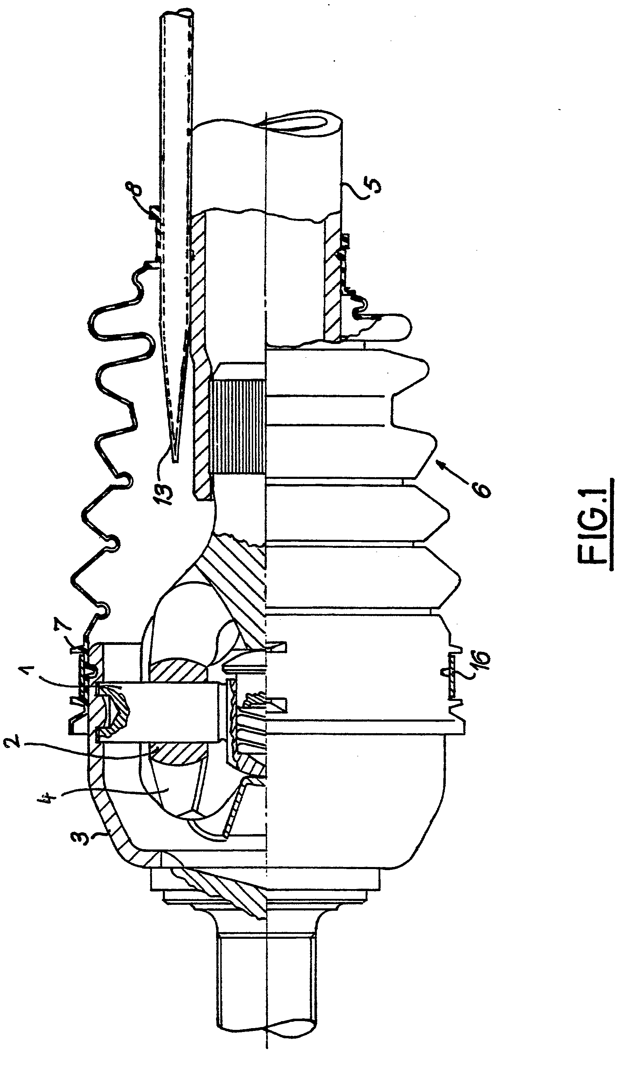

Le joint de transmission représenté à la figure 1 est ici du type tripode qui comprend notamment un triaxe 1 à galets 2 solidaire d'un bol 3. Une tulipe 4 à rampes de coulissement des galets 2 est solidaire d'un arbre 5.

Un soufflet d'étanchéité 6 comportant un corps en matériau thermoplastique à paroi ondulée d'épaisseur déterminée possède deux collerettes d'extrémité 7, 8 respectivement emmanchées sur le bol 3 et sur l'arbre 5, ce dernier portant une gorge 9 de réception d'une nervure 10 annulaire portée par la surface intérieure 11 de la collerette 8.

Selon l'invention la surface intérieure 11 de la collerette 8 tournée vers la surface extérieure cylindrique de l'arbre 5 présente au moins une rainure 12 destinée à l'introduction dans le soufflet d'une dose de graisse au moyen d'une canule 13. La rainure 12 permet simultanément l'évacuation de l'air contenu dans le soufflet au cours du processus de remplissage.

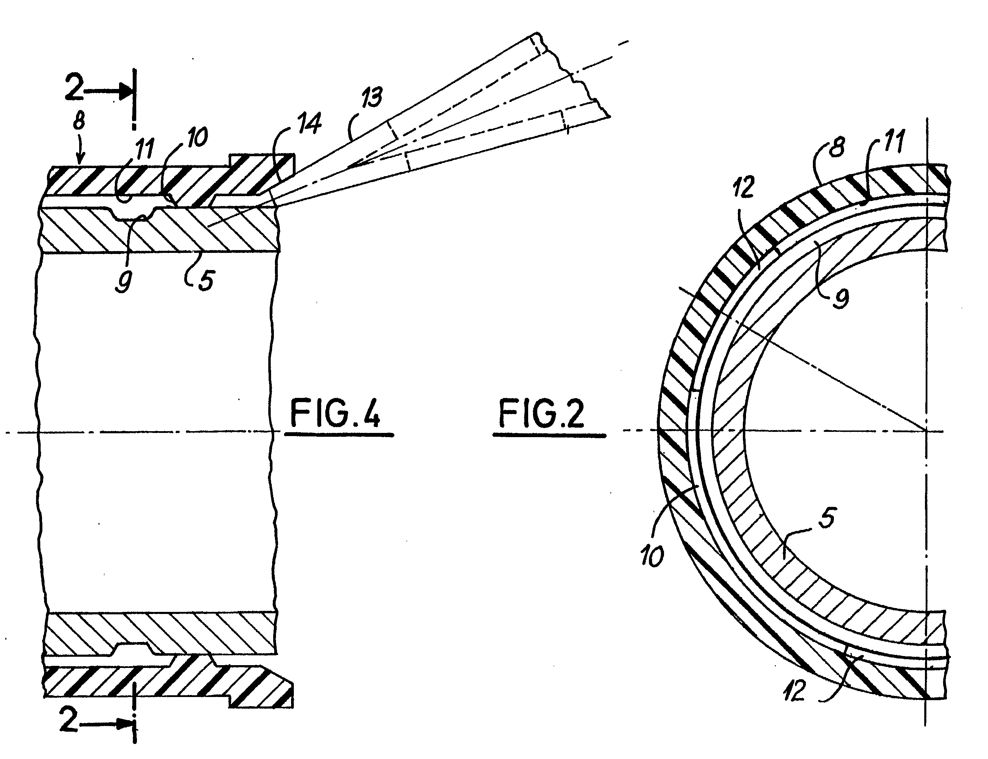

A titre d'exemple, la figure 2 représente une coupe à une plus grande échelle de la collerette 8 portant trois rainures 12 qui débouchent de part et d'autre de la nervure annulaire 10.

On conçoit aisément qu'après le processus de remplissage, il suffit de déplacer axialement la collerette 8, le long de l'arbre 5 jusqu'à l'engagement de la nervure 10 dans la gorge de réception 9 portée par l'arbre qui vient de la sorte an contact axial de retenue avec les flancs de la gorge 9.

Dans le but de permettre une meilleure introduction de la canule de remplissage 13, sans détériorer la collerette 8, la surface intérieure de celle-ci se prolonge axialement vers son flanc extrême par un chanfrein 14 de guidage.

Lorsque la collerette 8 occupe sa position définitive sur l'arbre 5, un collier 15 préalablement positionné sur la collerette est serré dans le but de fixer définitivement le soufflet sur l'arbre.

Il y a lieu de remarquer que la collerette 7 en contact avec le bol 3 porte de manière analogue un collier 16.

## Revendications

1/ Soufflet d'étanchéité (6) pour joints de transmission de véhicule du type comportant un corps à paroi ondulée d'épaisseur déterminée et deux collerettes (7, 8) d'extrémité destinées à être emmanchées respectivement sur les parties menante et menée du joint dont l'une est constituée par un arbre, caractérisé par le fait que la surface intérieure (11) de la collerette (8) d'extrémité, tournée vers la surface extérieure de l'arbre (5), présente au moins une rainure (12) de remplissage de graisse et d'évacuation d'air du soufflet et que ladite rainure débouche de part et d'autre d'une nervure (10) annulaire portée par la surface intérieure de la collerette susceptible de venir en contact axial de retenue avec les flancs d'une gorge (9) située à la périphérie de l'arbre (5).

2/ Soufflet d'étanchéité selon la revendication 1, caractérisé par le fait que la surface intérieure de la collerette se prolonge axialement vers le flanc extrême de celle-ci par un chanfrein (14) de guidage du dispositif de remplissage (13).

**Patentansprüche**

1. Balg (6) zur Abdichtung von Antriebsgelenkkupplungen von Fahrzeugen, welcher einen Körper mit gewellter Wand vorgegebener Dicke sowie zwei Endwülste (7, 8) aufweist, die dazu dienen, an den antreibenden bzw. angetriebenen Teilen der Kupplung eingeklemmt zu werden, wobei ein Teil eine Welle ist, dadurch gekennzeichnet, daß die Innenfläche (11) des Wulstes (8), die der Außenfläche der Welle (5) zugewandt ist, wenigstens eine Nut (12) aufweist zur Zufuhr von Fett und zur Abfuhr von Luft aus dem Balg und daß diese Nut beidseits einer ringförmigen Rippe (10) mündet, die an der Innenwand des Wulstes vorgesehen ist zur axialen Halterung von Flanken einer Rille (9), die am Umfang der Welle (5) vorgesehen ist.

2. Balg nach Anspruch 1, dadurch gekennzeichnet, daß die Innenfläche des Wulstes sich in axialer Richtung zu ihrer Außenflanke hin verlängert mittels einer Führungsschräge (14) für eine Füllvorrichtung.

**Claims**

1. A sealing bellows (6) for vehicle transmission joints of the type comprising a body having a corrugated wall of given thickness and two end collars (7, 8) which are intended to be fitted respectively on the driving and driven parts of the joint, one of which is formed by a shaft, characterised in that the internal surface (11) of the end collar (8) which is towards the external surface of the shaft (5) has at least one groove (12) for filling the bellows with grease and for the discharge of air therefrom and that said groove opens on respective sides of an annular rib (10) carried by the internal surface of the collar and capable of coming into axial retaining contact with the sides of a groove (9) at the periphery of the shaft (5).

2. A sealing bellows according to claim 1 characterised in that the internal surface of the collar is extended axially towards the end face thereof by a bevel (14) for guiding the filling device (13).

FIG.1

**FIG.4**

2

8

11

10

14

13

9

5

2

**FIG.2**

12

8

11

9

10

5

12

EP 0 279 728 B1

FIG.5

FIG.3

EP 0 279 728 B1